**Europäisches Patentamt**

**European Patent Office**

**Office européen des brevets**

(11) Veröffentlichungsnummer: **0 128 349**

**B1**

# EUROPÄISCHE PATENTSCHRIFT

(45) Veröffentlichungstag der Patentschrift:
18.03.87

(51) Int. Cl.⁴: **G 03 B 27/73**

(21) Anmeldenummer: **84105132.9**

(22) Anmeldetag: **07.05.84**

(54) Verfahren zur Bestimmung der Kopierlichtmengen in den einzelnen Grundfarben beim Farbkopieren.

(30) Priorität: **17.05.83 DE 3317818**

(43) Veröffentlichungstag der Anmeldung:
**19.12.84 Patentblatt 84/51**

(45) Bekanntmachung des Hinweises auf die Patenterteilung:
**18.03.87 Patentblatt 87/12**

(84) Benannte Vertragsstaaten:
**CH DE GB IT LI**

(56) Entgegenhaltungen:
**EP-A-0 012 713**
**DE-A-2 459 456**
**DE-A-2 535 034**
**DE-A-2 636 337**
**DE-A-2 637 055**
**DE-A-2 810 295**
**DE-A-2 912 130**
**DE-A-3 151 939**
**US-A-4 154 523**

(73) Patentinhaber: **AGFA- GEVAERT Aktiengesellschaft,**
**D-5090 Leverkusen 1 (DE)**

(72) Erfinder: **Fürsich, Manfred, Dr., Hainbuchenstrasse**
**53, D-8028 Taufkirchen (DE)**
Erfinder: **Treiber, Helmut, Dr., Bertelestrasse 67,**
**D-8000 München (DE)**

**Beschreibung**

Die Erfindung betrifft ein Verfahren zur Bestimmung der Kopierlichtmengen in den einzelnen Grundfarben beim Farbkopieren, wobei die Kopiervorlagen punktweise in drei Farben ausgemeßen werden, die Meßwerte jedes Punktes mit Grenzwerten verglichen werden zur Untersuchung ob der Punkt einer Farbdominante zuzurechnen ist und wobei zur Bemessung der Kopierlichtmengen in den Grundfarben die Meßwerte von Farbdominantenpunkten nicht oder nur mit verringertem Gewicht berücksichtigt werden.

Generell besteht beim Farbkopieren die Schwierigkeit, daß zwar vom Negativfilm oder dem Papier herrührende Farbstiche durch die sog. Neutralgraukompensation ausgeglichen werden können, daß aber durch generelle Anwendung dieser Maßnahme beim automatischen Steuern der Farbbelichtungen in dem Aufnahmemotiv begründete, intensiv gefärbte Flächen, sog. Farbdominanten, eine Farbverschiebung der Kopie herbeiführen, die zu unbrauchbaren Ergebnissen führt. Das Problem ist deshalb, Farbstiche von Farbdominanten zu unterscheiden und die sog. Neutralgraukorrektur nur bei Farbstichen anzuwenden. Bei dieser Neutralgraukorrektur werden die Kopierlichtmengen in den einzelnen Farben durch unterschiedliche Belichtungsdauer oder Unterschiede in der Intensität der Farben durch eine fotoelektrische Meßeinrichtung so bemessen, daß die Kopie im Mittel ein ungefärbtes Grau aufweist. Aus der DE-B- 25 35 034 ist ein fotografisches Farbkopiergerät mit einer fotoelektrisch gesteuerten Belichtungssteuervorrichtung bekannt, bei der verschiedene Bereiche der Kopiervorlage getrennt nach Farbanteilen ausgemessen und für jeden der Teilbereiche Farbverhältniswerte gebildet werden. Bei einem deutlichen Ungleichgewicht der Farbanteile in den Teilbereichen sind zur Berücksichtigung dieser Bereiche besondere Maßnahmen vorgesehen, wie eine nur teilweise Bewertung, die Berücksichtigung eines Grauwertes oder eines konstanten Wertes, um auf diese Weise bei der Ermittlung der Meßwerte für die Neutralgraukompensation Dominanten auszuschalten .

Bei der bekannten Vorrichtung wird durch Vergleich der Farbdichtewerte in den einzelnen Bereichen festgestellt, ob eine der drei Grundfarben ein deutliches Übergewicht gegenüber den anderen hat. Hierzu werden die Verhältniswerte Blau/Grün, Grün/Rot und/oder Rot/Blau mit fest vorgegebenen Vergleichswerten verglichen. Schon wegen der unterschiedlichen Farbdichten der Masken müssen solche fest vorgegebenen Vergleichswerte je nach Filmsorte unterschiedlich gewählt werden, wenn der Vergleich zu aussagefähigen Ergebnissen führen soll. Bei der Messung muß deshalb auch die Information vorliegen, um welches Filmfabrikat es sich gerade handelt. Diese Information ist in der Regel durch Eingabe von Hand beschaffbar, insbesondere wenn es sich um Nachbestellaufträge aufgrund von sog. Viererstreifen - Streifen mit jeweils vier oder fünf Negativen - handelt. Mit dieser Eingabe der Filmsorte bzw. des Filmfabrikates ist jedoch ein hoher Personalaufwand verbunden.

Nach einem anderen bekannten Verfahren wird zum Vergleich, ob es sich bei einem Ungleichgewicht der Farbdichten um eine Dominante handelt, in allen drei Farben je eine sog. Referenzdichte herangezogen, die aufgrund der Meßwerte einer großen Zahl von Kopiervorlagen eines bestimmten Filmfabrikats für jedes Fabrikat erneut ermittelt werden. Auch hier ist zur Abwicklung eines Kopiervorgangs die Information erforderlich, um welche Art von Film es sich bei der zu kopierenden Vorlage handelt. Darüber hinaus ist der Aufwand zu treiben, daß für jede zu kopierende Filmsorte aufgrund einer großen Zahl von Negativen die Referenzdichten in den drei Farben ermittelt werden.

Beiden Verfahren haftet der weitere Nachteil an, daß die am Filmrand ablesbare Filmsorte zwar angibt, welche fotometrischen Eigenschaften der Film bei richtiger Behandlungsweise hat. Gegenüber diesen Regelwerten können jedoch auch Ausreißer auftreten, wenn z. B. ein Film generell überlagert ist, bei zu hoher Temperatur gelagert wurde oder das latente Bild insbesondere bei hohen Temperaturen sich durch lange Lagerzeit verändert hat. Solche Abweichungen von den normalerweise vom Film zu erwartenden fotometrischen Eigenschaften führen auf jeden Fall zu Farbverschiebungen.

Aufgabe der Erfindung ist es, die Erkennung von motivbedingten Farbdominanten zu verbessern, insbesondere unabhängig von der Typangabe des jeweiligen Films zu machen.

Diese Aufgabe wird gelöst durch die im Anspruch 1 beschriebene Erfindung.

Der Erfindung liegt die Erkenntnis zugrunde, daß der dünnste Meßpunkte eines Negativs und seiner Umgebung bzw. des Filmstreifens, zu dem die Vorlage gehört, sehr wenig Aufnahmelicht empfangen hat und deshalb in der Nähe der Dichte der Maske liegt. Weiter ist darin die Erkenntnis berücksichtigt, daß bei Meßpunkten mit sehr dünner Gesamtdichte auch die Unterschiede der einzelnen Farbdichten untereinander nicht groß sein können. Auch dies ist ein Indiz dafür, daß der dünnste Punkt in seinen Einzelfarbdichten der Maske sehr ähnlich ist. Die Unterschiede der Einzelfarbdichten des jeweils zu beurteilenden Meßpunktes zu dem maskennahen dünnsten Punkt ergeben deshalb immer eine recht gute Aussage über die Farbigkeit des zu beurteilenden Punktes. Der Vergleich der so normierten Farbdichten untereinander mit gewissen Grenzwerten ergibt deshalb überraschend zuverlässige Erkenntnisse über das Vorliegen von vom Motiv her bedingten Farbdominanten. Von der Maske, Überlagerungen und Temperatureinflüssen herrührende Stiche sind bei dem dünnsten Vergleichspunkt in gleicher Weise wie im Bild vorhanden und dienen deshalb zuverlässig zur Unterscheidung der Stiche von Dominanten.

Die Erkennungssicherheit von Dominanten wird weiter gesteigert, wenn gemäß einer Ausgestaltung der Erfindung der dünnste Punkt nach seiner Neutraldichte, dem arithmetischen Mittel der drei Einzelfarbdichten ausgewählt wird und wenn zur Unterscheidung von in der Umgebung des Negativs vorhandenen Löchern weitere Kriterien über die einzuhaltenden Dichtewerte angewendet werden.

Eine weitere Steigerung in der Erkennungssicherheit wird erzielt, wenn die zum Vergleich herangezogenen Grenzwerte mit zunehmender Neutraldichte des Meßpunktes erweitert werden. Bei dieser Ausgestaltung der Erfindung wird ausgegangen von der Tatsache, daß bei sehr dünnen Meßpunkten schon ein relativ kleiner Unterschied der einzelnen Farbdichten untereinander ausreicht, daß dieser Punkt eine Dominante ist. Bei größeren Neutraldichten sind dagegen sehr viel höhere Unterschiede in den Einzelfarbdichten vorhanden, wenn es sich bei dem Meßpunkt um eine Dominante handelt. Durch Erweiterung der Grenzwerte mit zunehmender Neutraldichte der Meßpunkte wird diesem Rechnung getragen. Schließlich werden die Grenzwerte unterschiedlich nach der vorherrschenden Farbe festgelegt, da Farbdominanten in den einzelnen Farben unterschiedlich stark die Gesamtbelichtung stören.

Weitere Einzelheiten und Vorteile ergeben sich aus den Unteransprüchen im Zusammenhang mit der Beschreibung von Ausführungsbeispielen, die anhand von Figuren erläutert sind. Es zeigen:

Fig. 1 den prinzipiellen Aufbau eines Kopiergerätes zur Durchführung des erfindungsgemäßen Verfahrens,

Fig. 2 einen Filmabschnitt mit Kopiervorlagen,

Fig. 3 ein Diagramm für die Erkennung von Farbdominanten, ausgehend von einem Farbsechseck und

Fig. 4 ein weiteres Diagramm zur Erkennung von Farbdominanten, ausgehend von einem Farbsechseck.

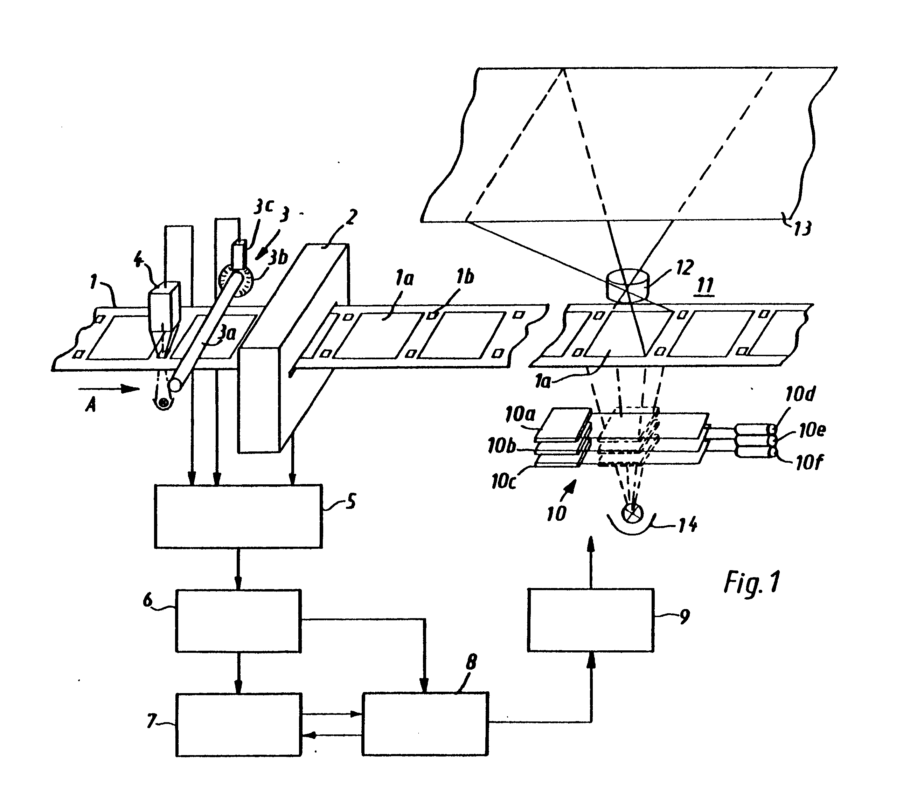

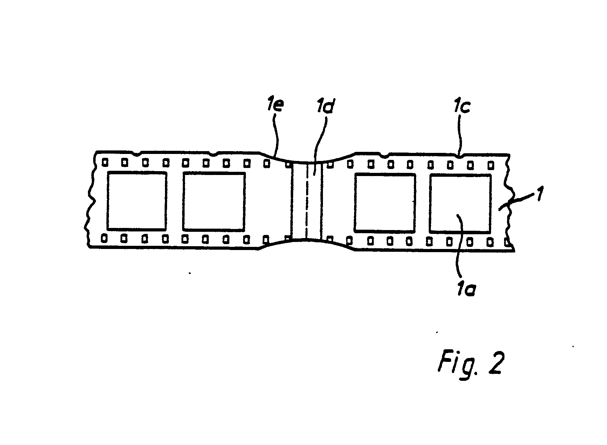

In Fig. 1 ist mit 1 ein belichteter und entwickelter Film bezeichnet, der verschiedene negative Kopiervorlagen 1a enthält. Jeweils in Zuordnung zu den Kopiervorlagen sind abtastbare Marken 1b angebracht. Diese können z. B. Perforationslöcher sein in Übereinstimmung mit den Kopiervorlagen bei den Filmformaten 126 und 110 oder bei 135-Filmen gemäß Fig. 2 nachträglich in Zuordnung zu den belichteten und entwickelten Kopiervorlagen angebrachte Randkerben.

Am Filmweg in Richtung des Pfeiles A angeordnet ist eine erste Abtastvorrichtung 4, z. B. in Form einer Lichtschranke, die die Marken 1b abtastet und die Signale über vorbeilaufende Marken 1b an einen Meßumformer 5 weiterleitet. Am weiteren Filmweg ist angeordnet ein Längengeber 3, der eine vom Film angetriebene Walze 3a und eine mit dieser verbundene Scheibe 3b enthält. Die Scheibe weist an ihrem äußeren Rand radial verlaufende, in gleichmäßigen Abständen angeordnete Schlitze auf, deren Vorbeilaufen durch eine Lichtschranke 3c in filmlängenabhängige Impulse umgesetzt wird. Die Lichtschranke 3c ist ebenfalls an den Meßumformer 5 angeschlossen.

Das nächstfolgende Aggregat längs des Filmweges ist ein Lichtwertgeber 2, der drei quer über die Filmlaufbahn sich erstreckende Zeilen von Fotoempfängern, z. B. Fototransistoren oder Fotodioden enthält, die jeweils etwa 1/10 der durchlaufenden Negativbreite abtasten. Die Fotoempfänger sind für je eine der Grundfarben sensibilisiert, so daß sie jeweils ein Signal für die Transparenz in jeder der drei Grundfarben für jeden Meßbereich oder Meßpunkt abgeben. Dazu können drei Zeilen von Fotoempfängern in Richtung des Pfeiles A dicht hintereinander liegen oder es wird das durchtretende Licht von einem einheitlichen Abtastbereich über teildurchlässige Spiegel und/oder Filter den jeweiligen Reihen von Fotoempfängern zugeführt. Auf diese Weise kann der Lichtwertgeber 2 an den Meßumformer 5 zu jedem Teilbereich der Vorlage die drei Farbtransparenzwerte weitergeben, die im Umformer in Dichtewerte umgesetzt werden. Durch die Koordination über den Längengeber 3b werden die dreißig Meßwerte einer Zeile jeweils so abgerufen, daß nach z. B. vierzehn Messungen bei Kleinbild eine gesamte Vorlage erfaßt ist. Der Abtaster 4 steuert dabei die Zuordnung jeweils zu einer bestimmten Vorlage 1a.

An den Meßumformer 5 ist ein Eingabeinterface 6 angeschlossen, das die von dem Lichtwertgeber gelieferten Dichtewerte sowohl an einen Speicher 7 als auch an einen Rechner 8 weitergibt, die miteinander verbunden sind. Der Rechner 8 kann z. B. ein Microprozessor der Firma Digital Equipment Corp. mit der Bezeichnung LSI 11/23 sein. Der Rechner holt sich dabei aus dem Speicher 7 jeweils die Daten, die er für die einzelnen Schritte des nachfolgend beschriebenen Rechenverfahrens benötigt.

An den Rechner 8 ist ein Ausgabeinterface 9 angeschlossen, das Steuerimpulse an eine Gruppe von Belichtungsfilteraggregaten 10 einer Kopierstation 11 gibt. In dieser Kopierstation, die um eine vorgegebene Filmlänge gegenüber der Abtaststation 2 versetzt ist, wird die jeweils in Kopierstellung befindliche Vorlage 1a durch ein Objektiv 12 auf einem Streifen 13 von Farbkopiermaterial abgebildet. Zwischen der Lichtquelle 14 und der Kopiervorlage 1a befinden sich die Führungseinrichtungen und Antriebsaggregate für die Kopierfilter 10a, 10b und 10c, die bei ihrem Einführen in den Kopierlichtstrahlengang jeweils die Belichtung in der betreffenden Grundfarbe beenden. Als Antriebsaggregate für die Filter sind in bekannter Weise Elektromagnete 10d, 10e und 10f vorgesehen. Die in Fig. 1 gezeigte Anordnung der Farbfilter 10a, b, c mit den zugehörigen Magneten steuert die Kopierlichtmenge in den einzelnen Farben durch unterschiedlich lange Belichtungszeiten. Die Steuerung der Kopierlichtmengen in den Farben kann auch durch eine Intensitätssteuerung erfolgen, bei der subtraktiv wirkende Farbfilter mehr oder weniger weit in den Strahlengang geschoben werden und diesen entsprechend den vom Rechner vorgegebenen Werten anfärben. Die Belichtungszeit in den drei Farben ist dann gleich lang, wird vom Rechner vorgegeben und durch einen Verschluß nach Art der Filterantriebe beendet.

Der in Fig. 1 dargestellte Filmstreifen 1 erscheint von einheitlicher Art und Länge. Die Filmstreifen sind jedoch immer aus einer größeren Anzahl einzelner Filme zusammengestellt, die durch Klebestellen miteinander verbunden sind. Gemäß Fig. 2, die einen Filmstreifen 1 der Konfektionierungsart 135 (Kleinbild) zeigt, sind neben den den einzelnen Bildfeldern 1a zugeordneten Randkerben 1c an der Klebestelle 1d beidseitig bogenförmige Ausstanzungen 1e angeordnet, die den Wechsel von einem Film zum nächsten maschinenmäßig erfaßbar machen. Als Signalgeber für eine Klebestelle könnte auch eine Infrarotabtastung vorgesehen sein, nachdem Klebestreifen in der Regel infrarotundurchlässig sind.

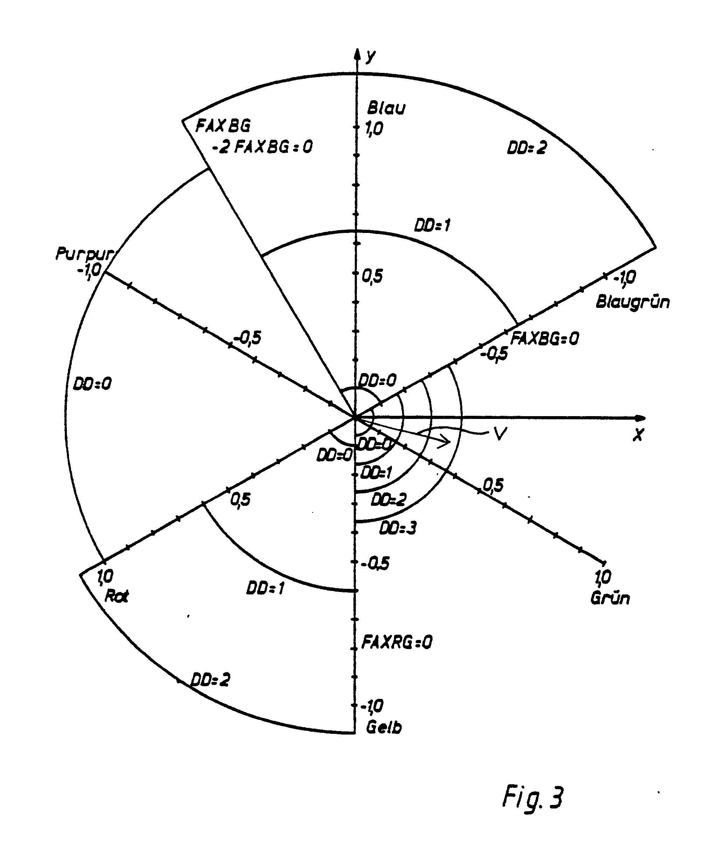

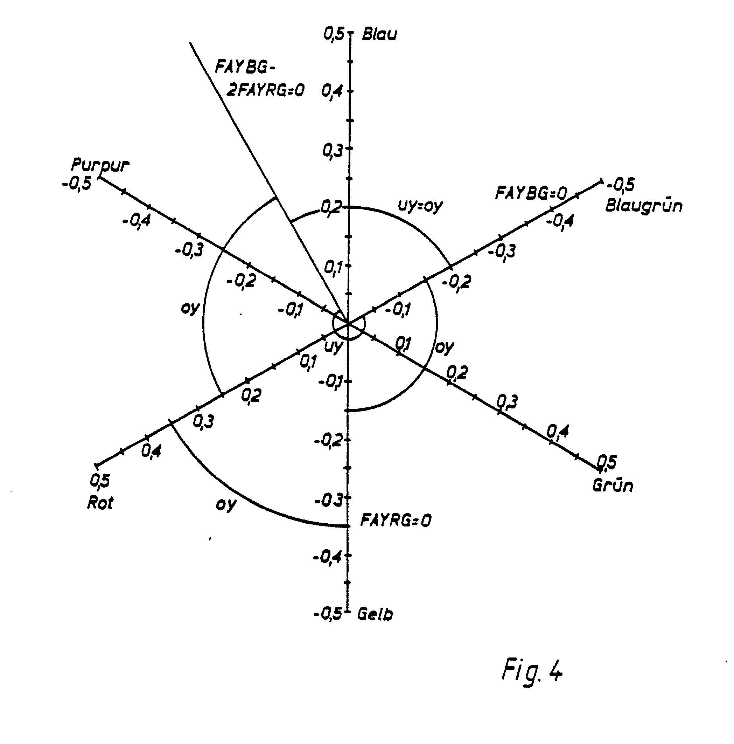

Die Auswertung der Meßwerte aus den Bildfeldern 1a erfolgt gemäß dem Schema in den Figuren 3 oder 4. In Fig. 3 ist ein Farbsechseck dargestellt, dessen Y-Achse mit der Blau-Achse zusammenfällt. Die X-Achse verläuft auf der Winkelhalbierenden zwischen der Achse Blaugrün und der Grün-Achse. In Verlängerung der Blaugrün-Achse, die mit negativen Maßzahlen versehen ist, liegt jenseits des Ursprungspunktes die Rot-Achse mit positiven Zahlen, d. h. Blaugrün entspricht negativ Rot. Ebenso liegt in Verlängerung der Grün-Achse die Purpur-Achse und in Verlängerung der Blau-Achse die Gelb-Achse. Der Nullpunkt (Ursprung) in diesem Farbsechseck wird gebildet von den drei Farb-Dichtewerten BMINI, GMINI, RMINI des dünnsten Punktes in dem betreffenden Negativ oder Filmstreifen. Das Farbsechseck ist außerdem eingeteilt in vier Sektoren, einmal in den Blau-Sektor zwischen der Winkelhalbierenden zwischen Purpur- und Blau-Achse und der Blaugrün-Achse, in den Grün-Sektor zwischen der Blaugrün-Achse und der Gelb-Achse, den Gelb/Rot-Sektor zwischen der Gelb- und der Rot-Achse und schließlich den Purpur-Sektor zwischen der Rot-Achse und der Winkelhalbierenden zwischen der Purpur- und der Blau-Achse. In jedem dieser Sektoren sind konzentrische Kreise mit unterschiedlichem Radius gezogen, deren Bedeutung anhand der Berechnung noch erläutert wird.

Mit Durchlauf einer Klebestelle 1d durch den Lichtwertgeber 2 wird der Lichtwertgeber in Meßbereitschaft versetzt. Dann wird die gesamte Filmlänge bis zur nächsten Klebestelle oder ein repräsentatives Stück des Filmes, im ungünstigsten Fall auch nur ein Negativ, in den drei Farben abgetastet und in Zuordnung zu den einzelnen Vorlagen 1a in dem Speicher 7 abgespeichert. Die Abtastung wird dabei auch über die Grenzen der Vorlagen 1a hinaus durchgeführt, so daß sowohl der Randbereich als auch die Stege zwischen aufeinander folgenden Bildfeldern 1a meßtechnisch erfaßt werden. Der Abstand bzw. die Filmlänge zwischen dem Lichtwertgeber 2 und der Kopierstation 11 ist dabei erforderlichenfalls durch Anordnung einer nicht dargestellten Schleife so bemessen, daß das erste Negativ eines Filmes oder Filmstückes erst dann in der Kopierstation 11 einläuft, wenn die zur Belichtungsberechnung notwendigen Daten gemessen und gespeichert sind. Mit Durchlauf der der Klebestelle 1d nachfolgenden Klebestelle durch die Kopierstation werden die dem Film zwischen den beiden Klebestellen zugeordneten gespeicherten Daten im Speicher 7 gelöscht.

Bei diesem Abtastvorgang wird der dünnste Punkt mit seinen drei Einzelfarbdichten ermittelt. Als dünnster Punkt wird derjenige Punkt ausgewählt, dessen Neutraldichte, das arithmetische Mittel der drei Einzelfarbdichten den kleinsten Wert erreicht. Dieser Wert darf nach Erfahrung nicht über 0,9 liegen. Dagegen können auch Punkte außerhalb der Vorlagenbereiche 1a in die Auswahl des dünnsten Punktes einbezogen werden. Um sicherzustellen, daß keine Löcher oder eingerissene Filmstücke als dünnster Punkt angesehen werden, werden zusätzliche Kriterien angelegt, nämlich daß die Blaudichte größer 0,7 sein muß und daß die Differenz zwischen Blaudichte und Rotdichte größer 0,15 sein muß.

Ausgehend von den Einzelfarbdichten des so ermittelten dünnsten Punktes DDÜNN (Neutraldichte), BDÜNN (Blaudichte), RDÜNN (Rotdichte) und GDÜNN (Gründichte) wird der Ursprung des Farbsechsecks gemäß Fig. 3 festgelegt. Die Erfahrung hat gezeigt, daß der dünnste Punkt nur wenig von der Maskendichte des betreffenden Filmes abweicht. Dies ist auch der Grund, warum es zu der folgenden Erkennung von Dominanten keiner zusätzlichen Information über das jeweils verwendete Negativfilmmaterial bedarf. In diese Dominantenuntersuchung werden jedoch nur Punkte einbezogen, die innerhalb der Vorlagenfläche 1a liegen.

Mit den aus dem Speicher 7 entnommenen Farbdichte- und Neutraldichtewerten eines Meßpunktes aus dem Vorlagenbereich 1a wird dann folgender Rechengang vorgenommen, um festzustellen, ob dieser Punkt einer Farbdominante zuzurechnen ist. Zunächst wird für jede Farbe die Differenz zwischen dem Meßwert des Punktes und der entsprechenden Dichte des dünnsten Punktes gebildet und diese drei Differenzwerte im Farbsechseck vektoriell addiert. Der resultierende Farbvektor V des zu untersuchenden Punktes hat dann eine vom Ursprung ausgehende gewisse Länge und eine Richtung. Als Beispiel ist in Fig. 3 ein resultierender Vektor V mit den Einzelfarbdichtedifferenzen Grün = 1,0, Blau = 0,7 und Rot = 0,6 eingezeichnet. Der Grenzwert, mit dem dieser Vektor verglichen wird, ist nun abhängig von dem Farbsektor, in den der Vektor V reicht und der Dichte DD, die gleich der Differenz der Neutraldichte des zu untersuchenden Punktes PD und der Neutraldichte des dünnsten Punktes DDÜNN ist; bei dem Beispiel gemäß Fig. 3 ist

$$DD = \frac{2,3}{3} \quad ca. \approx 0,77.$$

Die Formel für die Berechnung der Grenzwerte

$$GR = UX + DD \times SX$$

zeigt, daß der Grenzwert GR ausgeht von einem gewissen Sockelbetrag UX und daß die Grenze sich linear ausweitet mit steigender Dichtedifferenz DD. Für jeden Farbsektor sind dabei unterschiedliche Werte für UX und SX einzusetzen.

Als optimal für derzeitiges Filmmaterial haben sich folgende Werte erwiesen:

|  |  |  |
|---|---|---|
| Grün | UX = 0,07 | SX = 0,1 |
| Blau | UX = 0,1 | SX = 0,55 |
| Gelb/Rot | UX = 0,1 | SX = 0,5 |
| Purpur | UX = 1,0 | SX = 3,0. |

Die Errechnung der Größe und Lage des resultierenden Farbvektors mit einem Rechner der angegebenen Art

4

erfolgt zweckmäßigerweise unter Verwendung der Blau/Grünund Rot/Grün-Differenzwerte PBG und PRG zwischen den Dichtewerten. Dabei ergibt sich für die Farbdifferenzwerte im Farbsechseck

$$FAXBG = PBG - BMINI + GMINI \text{ und}$$

$$FAXRG = PRG - RMINI + GMINI,$$

wobei GMINI, GMINI und RMINI die Farbdichten des dünnsten Punktes bedeuten.

FAXBG und FAXRG stellen somit die Farbigkeit eines Punktes bezüglich des dünnsten Punktes dar. Der Abstand der Spitze des Farbvektors vom Zentrum ergibt sich dann mit

$$RX = \sqrt{FAXBG^2 + FAXRG^2 - FAXBG \times FAXRG}.$$

Die Lage des resultierenden Farbvektors im Farbsechseck gemäß Fig. 3 ergibt sich aus folgender Tabelle:

Grün,       wenn FAXBG kleiner 0 und

              FAXRG ebenfalls kleiner 0

Blau,       wenn FAXBG größer 0 und

              FAXBG - 2FAXRG größer 0

Gelb/Rot,   wenn FAXRG größer 0 und

              FAXBG kleiner 0 und

Purpur,     wenn FAXBG größer 0 und

              FAXBG - 2FAXRG kleiner 0.

Die absolute Größe des Vektors wird dann mit dem für den betreffenden Sektor und für die Neutraldichte des zu untersuchenden Punktes zutreffenden Grenzwert verglichen.

In Fig. 3 ist diese Grenzfläche versinnbildlicht als eine Reihe von konzentrischen Kreisen, die jeweils auf einer Kegelstumpffläche liegen. Durchstößt der Vektor ausgehend von der Achse dieses Farbsechsecks in der der Neutraldichte DD entsprechenden Höhe den Kegelmantel, so ist der entsprechende Punkt der Vorlage als Dominante anzusehen. Dieser Wert wird dann z. B. nicht aufsummiert, sondern bei der Bildung der zur Belichtungssteuerung dienenden Farbdichte der Vorlage nicht berücksichtigt oder mit vermindertem Gewicht berücksichtigt. Der Beispielsvektor V in Fig. 3 liegt in dem grünen Sektor und hat eine Länge von 0,35. GR ergibt sich dann mit 0,07 + 0,77 x 0,1 = 0,147, d. h. der Vektor V überschreitet den Grenzwert und gilt als grüne Dominante.

Nach dieser Methode werden sämtliche Meßpunkte einer Vorlage 1a untersucht und die nicht-dominanten Punkte aufsummiert. Die Kopierlichtmengen in den einzelnen Farben werden so gesteuert, daß sich aufgrund der aufsummierten Meßwerte der nicht-dominanten Punkte in der Kopie in diesen Punkten ein ungefärbtes Grau ergibt. Dies bewirkt, daß die stark farbgesättigten oder dominanten Punkte dann ohne Farbverschiebung, d. h. richtig wiedergegeben werden.

Eine noch höhere Genauigkeit in der Erkennung von Farbdominanten und in der Steuerung der Kopierbelichtungen erreicht man, wenn die Dominantenerkennung gemäß Fig. 3 für ein gewissermaßen zweistufiges Kopierbelichtungssteuerverfahren gemäß der DE-A- 29 12 130 angewendet wird. Dieses Verfahren richtet sich darauf, innerhalb aller Vorlagen eines Filmes oder wenigstens innerhalb einer für eine repräsentative Beurteilung eines Filmes ausreichenden Zahl von Vorlagen für alle Meßpunkte die Neutraldichte und die Differenz der blauen und grünen und rot/grünen Dichtewerte zu bilden und als Maß für die fotometrischen Eigenschaften des betreffenden Negativfilmes über der Neutraldichte jeweils durch Mittelung die beiden Dichtedifferenzkurven zu bilden. Dies ermöglicht es, zu einer bestimmten Neutraldichte eines Kopiervorlagenpunktes dann eine die normale Wiedergabe ermöglichende Kopierlichtmenge zu errechnen.

Um bei der Ermittlung dieser Farbdichtedifferenzkurven keine von Dominanten herrührenden Verfälschungen einzuführen, ist es von Bedeutung, die Meßwerte von farbdominanten Meßpunkten außer Betracht zu lassen. Die erste Auswertung der Meßpunkte eines Films aus dem Speicher 7 durch den Rechner 8 erfolgt bei diesem Verfahren in gleicher Weise wie anhand des Diagramms nach Fig. 3 beschrieben. Jeder einzelne Punkt wird auf Zugehörigkeit zu einer Farbdominante überprüft und nur die Punkte, die als nicht-dominant anerkannt sind, werden zur Bildung der Farbdichtedifferenzkurven FDDK herangezogen. Diese Farbdichtedifferenzkurven dienen gemäß der Lehre der DE-A- 29 12 130 zum Errechnen des filmspezifischen Anteils an den Steuerdichten, die sich in der Regel zur Hälfte aus filmspezifischen und zur anderen Hälfte aus vorlagenspezifischen Werten zusammensetzen.

Auch zum Ermitteln der vorlagenspezifischen Werte ist eine genaue Unterscheidung zwischen dominanten Punkten und nicht-dominanten Meßpunkten erforderlich. Gemäß dem Farbsechseck in Fig. 4 wird für diese Unterscheidung wiederum für die Sektoren Blau, Grün, Gelb/Rot und Purpur mit unterschiedlichen Grenzwerten gearbeitet. Ursprung dieses Farbsechsecks ist jedoch nicht mehr der dünnste Punkt des Films oder der Vorlage, sondern Ausgangspunkt sind die jeweiligen, der Neutraldichte des zu untersuchenden Punktes entsprechenden Differenzwerte der Farbdichtedifferenzkurven FDDK. Die Farbigkeit des Meßpunktes

5

FAYBG bzw. FAYRG ist dabei gegeben durch

$$FAYBG = PBG - FBG \ (PD)$$

$$FAYRG = PRG - FRG \ (PD).$$

FBG und FRG sind dabei die aus den Dichtedifferenzkurven entnehmbaren Werte PBG und PRG die Farbdichtedifferenzen des Meßpunktes. Aufgrund dieser Werte läßt sich für den resultierenden Farbvektor wieder die Länge angeben durch

$$RY = \sqrt{FAYBG^2 + FAYRG^2 - FAYBG \times FAYRG}.$$

Die Grenze errechnet sich dabei ausgehend von einem Sockelbetrag UY um einen Betrag multipliziert mit der Differenz der Neutraldichte des Meßpunktes minus der Neutraldichte des dünnsten Punktes nach der Formel

$$GRY = UY + 1/0,5 \ (OY - UY) \times DD.$$

Diese Formel gilt jedoch nur für Dichtewerte DD bis höchstens 0,5. Für darüber liegende Werte ist die Grenze gleich OY. Für die verschiedenen Farbsektoren ergeben sich dabei folgende Grenzwerte:

| | | |
|---|---|---|
| Grün | UY = 0,03 | OY = 0,15 |
| Gelb/Rot | UY = 0,03 | OY = 0,35 |
| Rot/Purpur | UY = 0,03 | OY = 0,25 |
| Blau | UY = 0,2 | OY· = 0,2. |

Die Feststellung, in welchen Sektor ein resultierender Vektor fällt, erfolgt in gleicher Weise wie bei dem Schema nach Fig. 3.

Hier läßt sich der Raum, innerhalb dessen sich die resultierenden Farbvektoren als nicht-dominant erkennen lassen, als aus Kegelstumpfsektoren gebildet darstellen, wobei über der Dichte DD gleich 0,5 die Sektorenanteile in kreiszylindrische Sektoren übergehen. Dies bedeutet, daß über der Differenzdichte 0,5 keine weitere Erweiterung des Grenzbereiches mehr stattfindet.

Aufgrund der so erfolgten Entscheidung über das Vorliegen eines farbdominanten Punktes wird wiederum der gesamte Bestand an Meßpunkten einer Vorlage 1a überprüft und die Dichtewerte der nicht-dominanten Punkte werden aufsummiert. Aufgrund dieses Flächenintegrals der Dichtewerte wird dann in jeder Farbe die vorlagenspezifische Größe bestimmt, die zusammen mit der filmspezifischen Größe die Steuerdichten in den drei Farben liefert.

Aufgrund der Steuerdichten werden dann auf die in der DE-A- 29 12 130 angegebenen Weise Vorgaben für die Kopierlichtmengen in den einzelnen Farben gemacht, so daß die dominanten Meßpunkte keinen Beitrag für die Bemessung der auf die Kopiervorlage auftreffenden Kopierlichtmengen liefern.


**Patentansprüche**

1. Verfahren zur Bestimmung der Kopierlichtmengen in den einzelnen Grundfarben beim Farbkopieren, wobei die Kopiervorlagen punktweise in drei Farben ausgemessen werden, die Meßwerte jedes Punktes mit Grenzwerten verglichen werden zur Untersuchung, ob der Punkt einer Farbdominante zuzurechnen ist und wobei zur Bemessung der Kopierlichtmengen in den Grundfarben die Meßwerte von Farbdominantenpunkten nicht oder nur mit verringertem Gewicht berücksichtigt werden, dadurch gekennzeichnet, daß zur Entscheidung, ob ein Meßpunkt einer Farbdominante zuzurechnen ist, in der betreffenden Kopiervorlage einschließlich ihrem Umfeld oder in dem zu der Kopiervorlage gehörenden Filmstreifen der nach seiner Neutraldichte, dem arithmetischen Mittel der Dichtewerte in den drei Meßfarben (B, G, R) dünnste Meßpunkt ermittelt und die Farbigkeit der zu untersuchenden Meßpunkte mit den Grenzwerten verglichen wird, wobei die Farbigkeit durch die Richtung und Länge des Farbvektors V, d. h. der vektoriellen Summe der Differenzwerte zwischen den Farbdichten von Meßpunkten und dünnstem Punkt im Farbsechseck gegeben ist.

2. Verfahren nach Anspruch 1, dadurch gekennzeichnet, daß der dünnste Punkt nur dann als dünnster Punkt anerkannt wird, wenn seine Blaudichte B größer als 0,7 und die Differenz der Blaudichte und der Rotdichte B - R größer als 0,15 ist, um Löcher im Film und eingerissene Stellen als Meßgrundlage auszuschließen.

3. Verfahren nach Anspruch 1, dadurch gekennzeichnet, daß der dünnste Punkt nur dann als dünnster Punkt anerkannt wird, wenn seine Neutraldichte D kleiner als 0,9 ist, um anbelichtete Stellen als Meßgrundlage auszuschließen.

4. Verfahren nach einem der vorangehenden Ansprüche, dadurch gekennzeichnet, daß je nach der betreffenden Farbigkeit des Punktes ein Grenzwert vorgegeben wird, bei dessen Über- oder Unterschreiten auf Zugehörigkeit eines Meßpunktes zu einer Dominante entschieden wird.

6

5. Verfahren nach einem der Ansprüche 1 bis 4, dadurch gekennzeichnet, daß die Grenzwerte mit zunehmender Differenz DD der Neutraldichten des zu untersuchenden Meßpunktes und des dünnsten Punktes erhöht werden.

6. Verfahren nach Anspruch 5, dadurch gekennzeichnet, daß die Erhöhung der Grenzwerte, ausgehend von einem Sockelbetrag UX, proportional der Differenz DD der Neutraldichten des zu untersuchenden und des dünnsten Punktes erfolgt.

7. Verfahren nach Anspruch 6, dadurch gekennzeichnet, daß der Sockelbetrag UX und der Proportionalitätsfaktor SX für jede der Farben unterschiedliche Werte annimmt, insbesondere für

```
Grün       die Werte UX = 0,07 und SX = 0,1,

Blau       die Werte UX = 0,1  und SX = 0,55,

Gelb/Rot die Werte UX = 0,1  und SX = 0,5 und für

Purpur     die Werte UX = 1,0  und SX = 3,0.
```

8. Verfahren nach den Ansprüchen 1 bis 6, dadurch gekennzeichnet, daß aus den Meßwerten der als nicht dominant erkannten Meßpunkte für den betreffenden Film bzw. Filmabschnitt durch Bildung von Farbdifferenzen Blau - Grün bzw. Rot - Grün über der jeweiligen Neutraldichte D der Meßpunkte als Maß für die fotometrischen Eigenschaften dieses Films sogenannte Farbdichtedifferenzkurven FBG bzw. FRG ermittelt werden und daß bei einem zweiten Prüfvorgang der Meßwerte auf Vorliegen einer Dominante zum Ermitteln von vorlagenspezifischen, nur für die jeweilige zu kopierende Vorlage gültigen Werten von der Farbigkeit des jeweiligen Meßpunktes gegenüber den entsprechend der jeweiligen Neutraldichte des Meßpunktes aus den Farbdichtedifferenzkurven entnommenen Farbdifferenzen ausgegangen wird und diese durch Differenzbildung ermittelte Farbigkeit mit für verschiedene Farben und Neutraldichten DD unterschiedlichen Grenzwerten verglichen wird.

9. Verfahren nach Anspruch 8, dadurch gekennzeichnet, daß die Grenzwerte, ausgehend von einem Sockelwert UY mit steigender Neutraldichte DD aufgeweitet werden bis zu einem zweiten Grenzwert OY und dann für höhere Neutraldichten DD konstant bleiben.

**Claims**

1. Process for the determination of the printing light quantities in the individual primary colours in colour printing, wherein the originals to be printed are measured spot-wise in three colours, the measured values for each spot are compared with limit values in order to examine whether the spot can be ascribed to a colour dominant, and wherein, for the determination of the printing light quantities in the primary colours, the measured values of colour dominant spots are not considered or only considered to a lesser degree, characterised in that in order to decide whether a measured spot can be ascribed to a colour dominant the thinnest measured spot in the particular original to be printed, including its surrounding area, or in the film strip belonging to the original to be printed is determined according to its neutral density, the arithmetic average between the density values in the three measured colours (B, G, R), and the colour characteristics of the measured spots to be examined are compared with the limit values, the colour characteristic being represented by the direction and length of the colour vector V, i.e. the vectorial sum of the difference values between the colour densities of measured spots and the thinnest spot in the colour hexagon.

2. Process according to Claim 1, characterised in that the thinnest spot is only considered to be the thinnest spot if its blue density B is larger than 0.7 and the difference between the blue density and the red density B - R is greater than 0.15, so that holes in the film and torn areas are excluded as a basis for measurement.

3. Process according to Claim 1, characterised in that the thinnest spot is only considered to be the thinnest spot if its neutral density D is smaller than 0.9, so that partially exposed areas are excluded as a basis for measurement.

4. Process according to one of the preceding claims, characterised in that, depending on the respective colour characteristic of the spot, a limit value is set, and the decision as to whether a measured spot is associated with a dominant depends on whether it lies above or below this limit value.

5. Process according to one of Claims 1 to 4, characterised in that the limit values are raised as the difference DD increases between the neutral density of the measured spot to be examined and that of the thinnest spot.

6. Process according to Claim 5, characterised in that the limit values are raised, starting from a basic value UX, proportionally to the difference DD between the neutral density of the spot to be examined and that of the thinnest spot.

7. Process according to Claim 6, characterised in that the basic value UX and the proportionality factor SX assume different values for each of the colours, and in particular, for

```
green       the values UX = 0.07 and SX = 0.1,

blue        the values UX = 0.1  and SX = 0.55,

yellow/red  the values UX = 0.1  and SX = 0.5 and
for

magenta     the values UX = 1.0  and SX = 3.0.
```

8. Process according to Claims 1 to 6, characterised in that, as a criterion of the photometric properties of a film, so-called colour density difference curves FBC and FRG are determined from the measured values of the measured spots recognised as being non-dominant for the film or film section concerned by plotting blue - green and red - green colour differences against the respective neutral density D of the measured spots and in that in a second examination procedure of the measured values as to the presence of a dominant, for the determination of original-related values which are only applicable to the particular original to be printed, the colour characteristic of the measured spot concerned compared with the colour differences taken from the colour density difference curves according to the respective neutral density of the measured spot is used as a basis and this colour characteristic determined by subtraction is compared with limit values which vary for different colours and neutral densities DD.

9. Process according to Claim 8, characterised in that the limit values are extended as the neutral density DD increases, starting from a basic value UY, up to a second limit value OY and then remain constant for higher neutral densities DD.

**Revendications**

1. Procédé pour déterminer les quantités de lumière de copiage dans les couleurs fondamentales individuelles lors du copiage couleur, dans lequel les exemplaires de copiage sont mesurés par points en trois couleurs, les valeurs mesurées de chaque point sont comparées à des valeurs limites afin d'examiner si le point d'une dominante de couleur doit être ajouté, et dans lequel, pour mesurer les quantités de lumière de copiage dans les couleurs fondamentales, les valeurs mesurées de points de dominantes de couleur ne sont pas prises en considération ou le sont seulement dans une mesure réduite, caractérisé par le fait que, en vue de décider si un point de mesure d'une dominante de couleur doit être ajouté, l'on détermine dans l'exemplaire de copiage considéré, y compris son champ periphérique, ou dans la bande de film faisant partie de l'exemplaire de copie, le point de mesure le plus mince d'après sa densité neutre, la moyenne arithmétique des valeurs de densité dans les trois couleurs mesurées (B, G, R), et la coloration des points de mesure à examiner est comparée aux valeurs limites, la coloration étant donnée par la direction et la longueur du vecteur V de couleur, c'est-à-dire par la somme vectorielle des valeurs différentielles entre les densités de couleur de points de mesure et le point le plus mince dans l'hexagone des couleurs.

2. Procédé selon la revendication 1, caractérisé par le fait que le point le plus mince est reconnu, en tant que point le plus mince, seulement lorsque sa densité au bleu B excède 0,7 et la différence B - R de la densité au bleu et de la densité au rouge excède 0,15, afin d'exclure, en tant que base de mesure, des perforations dans le film et des zones de déchirure.

3. Procédé selon la revendication 1, caractérisé par le fait que le point le plus mince est reconnu, en tant que point le plus mince, seulement lorsque sa densité neutre D est inférieure à 0,9, afin d'exclure, en tant que base de mesure, des zones non exposées.

4. Procédé selon l'une des revendications précédentes, caractérisé par le fait que, en fonction de la coloration considérée du point, est prédéterminée une valeur limite au-dessus ou au-dessous de laquelle une décision est prise quant à l'appartenance d'un point de mesure à une dominante.

5. Procédé selon l'une des revendications 1 à 4, caractérisé par le fait que les valeurs limites sont augmentées au fur et à mesure de la croissance de la différence DD des densités neutres du point de mesure devant être examiné, et du point le plus mince.

6. Procédé selon la revendication 5, caractérisé par le fait que l'augmentation des valeurs limites a lieu, en se fondant sur une grandeur de base UX, proportionnellement à la différence DD des densités neutres du point respectivement à examiner et le plus mince.

7. Procédé selon la revendication 6, caractérisé par le fait que la grandeur de base UX et le facteur de proportionnalité SX prennent des valeurs différentes pour chacune des couleurs, en particulier pour

```
le vert,        les valeurs UX = 0,07 et SX = 0,1,

le bleu,        les valeurs UX = 0,1 et SX = 0,55,

le jaune/rouge, les valeurs UX = 0,1 et SX = 0,5 et pour

le pourpre,     les valeurs UX = 1,0 et SX = 3,0.
```

8. Procédé selon les revendications 1 à 6, caractérisé par le fait que, à partir des valeurs mesurées des points de mesure du film ou de la longueur de film considéré reconnus comme non dominants, l'on détermine, par formation de différences de couleurs bleu-vert ou rouge-vert d'après la densité neutre considérée D des points de mesure, en tant que paramètre pour les propriétés photométriques de ce film, ce qu'on appelle des courbes différentielles de densité de couleur FBG ou FRG, respectivement; et par le fait que, lors d'un second processus de contrôle des valeurs mesurées pour établir la présence d'une dominante en vue de déterminer des valeurs spécifiques à un exemplaire et valables seulement pour l'exemplaire considéré à copier, l'on part de la coloration du point de mesure considéré par rapport aux différences de couleur dérivées des courbes différentielles de densité de couleur, d'une manière correspondant à la densité neutre considérée du point de mesure, puis cette coloration déterminée par formation d'une différence est comparée à des valeurs limites différentes pour diverses couleurs et densités neutres DD.

9. Procédé selon la revendication 8, caractérisé par le fait que, en se fondant sur une grandeur de base UY, les valeurs limites sont élargies au fur et à mesure de la croissance de la densité neutre DD, jusqu'à une seconde valeur limite OY, puis demeurent constantes pour des densités neutres DD supérieures.

Fig.1

Fig. 2

Fig. 3

Fig. 4